# EUROPEAN PATENT APPLICATION

(11) **EP 2 060 964 A1**
(43) Date of publication of application: **20.05.2009**
(21) Application number: 07120037.2
(22) Date of filing: 06.11.2007
(51) Int. Cl.: G06F 3/01, G06F 3/033, B60K 37/06

(54) **Method for haptic feedback**

(71) Applicant: Ford Global Technologies, LLC, Dearborn, MI 48126 (US)
(72) Inventor: Agardh, Johannes, 438 93, Landvetter (SE); Broström, Robert, 423 53, Torslanda (SE)
(74) Representative: Ekwall, Peter

(57) **Abstract**

Method for giving feedback to a user of a audio system in a vehicle, wherein said system comprises a rotational knob, comprising the step of applying a haptic feedback to the rotational knob when a predefined condition is fulfilled. The advantage of the invention is that a user can receive feedback without having to look at a display, minimizing the distraction of the user.

## Description

### TECHNICAL FIELD

The present invention relates to a method for giving feedback to a user of a radio tuner. The method is especially advantageous for giving feedback in a radio tuner used in a vehicle, where the attention of the driver should be disturbed as little as possible.

### BACKGROUND ART

Modern audio systems for vehicles are provided with numerous functions. The way to handle the different functions varies between different manufactures and different models. Some models have an all-button interface, where every function is executed by pushing a button. Some models, especially the ones integrated with a navigation device and/or an information system, have a menu driven system, where the functions are selected and altered in a menu based system using a dedicated multifunction input device. Both these types of input systems require a great deal of attention from the user, i.e. the driver of the vehicle, in order to select and alter the wanted function.

Some vehicle audio systems also have the possibility to control some functions with buttons positioned on or near the steering wheel. This may reduce the distraction of the driver during manipulation of these functions. One function often integrated in or near the steering wheel is the selection of a radio station. One way of selecting a desired radio stations is to jump through a list with pre-stored radio stations. These stations are previously selected stations that are stored in the memory of the radio, often in the order they where found or under specific numbers, e.g. 1-10. A radio station may also be found by letting the radio scan the frequency band and stop when a station of a predefined strength is found. The strength at which the radio stops is preset in the radio and can not be selected by the user. If the found station is not of the liking by the user/driver, he/she has to continue the scan function until the radio finds the next station of the required strength. In this way, the user/driver may have to either use the scan function a numerous times when there are many stations available, or there may be none or few stations found when the reception is poor. Some audio systems allow for a manual station search, but this function is mostly a step function which also requires a great deal of button pushing. Some audio systems still also have the possibility to search for a radio station by turning a frequency knob. This allows for a quick scan through the frequencies, but makes it more difficult to find the correct frequency for the desired station.

In order to be able to find a desired radio station in a quick and easy way, that reduces the distraction of the driver, an alternative way to search a radio station is of advantage.

### DISCLOSURE OF INVENTION

An object of the invention is therefore to provide a method for giving feedback to the user of a radio tuning function, so that the distraction of the user is as low as possible.

The solution to this problem according to the invention is described in the characterizing part of claim 1 regarding the method. The other claims contain advantageous embodiments and further developments of the method according to the invention.

With a method for giving feedback to a user of a audio system in a vehicle, wherein said system comprises a rotational knob, the object of the invention is achieved by applying a haptic feedback to the rotational knob when a predefined condition is fulfilled.

By this first embodiment of the method according to the invention, a method is provided, which makes it possible to give feedback to a user of an audio system in a vehicle, by using the tactile sense of the user. The advantage is that feedback can be given to a user, which will not distract the user, i.e. the driver, of the vehicle by forcing him/her to move his eyesight from the road.

In an advantageous development of the invention, the rotation of the rotational knob performed by the user is detected, the frequency of the radio is changed depending on this rotation, and the strength of the radio signal is measured. The value of the measured radio signal is compared to a predefined level, and if the value is above this level, a haptic feedback is given. The advantage of this is that the feedback is only given for predefined cases, which may prevent the system for giving feedback unnecessarily. This may e.g. prevent the system of indicating that a radio station is found where the perception is to low to be practical to hear at all.

In another advantageous development of the invention, the strength of the haptic feedback signal is proportional to the strength of the radio signal. The advantage of this is that the user will get an instant indication of how strong the radio signal is, without having to look on a display or listen to the sound from the speakers.

In an advantageous further development of the invention, the haptic feedback signal is given by a brake function acting on the rotational knob. This is advantageous in that an easy and cheap system can be used to give the haptic feedback.

In an advantageous further development of the invention, the haptic feedback signal is given by an active force generator acting on the rotational knob. This is advantageous in that the haptic feedback signal can be varied in different ways, indicating different feedback information to the user. The feedback signal can be varied in e.g. strength, duration and gradient. The haptic feedback signal can be given as a short force pulse or as a varying force signal. In one development, the active force generator is an electric motor.

In an advantageous further development of the invention, the haptic feedback signal is provided with a gradient. The advantage of this is that a user will know that a radio station is soon to be found, before it is actually found.

In an advantageous further development of the invention, the slope of the gradient in the feedback signal is dependent on the direction of the searched frequency. This is advantageous in that the user will know that a radio station is coming, regardless in which direction the frequencies are searched. By using a low gradient on the leading edge of the feedback signal and a steep gradient on the trailing edge of the feedback signal, more room is created for giving the user an appropriate feedback.

### BRIEF DESCRIPTION OF DRAWINGS

The invention will be described in greater detail in the following, with reference to the embodiments that are shown in the attached drawing, where
- Fig. 1: shows a front view of a car audio system to be used with the method according to the invention, and
- Fig. 2: shows a flow chart of the method according to the invention.

### MODES FOR CARRYING OUT THE INVENTION

The embodiments of the invention with further developments described in the following are to be regarded only as examples and are in no way to limit the scope of the protection provided by the patent claims.

In the following, a stand-alone vehicle audio apparatus is used to illustrate the method for giving feedback. It should be understood that the method can be used for any system, where a radio tuning function using a rotational knob can be performed. A radio tuning function in an infotainment system may e.g. also incorporate the feedback method.

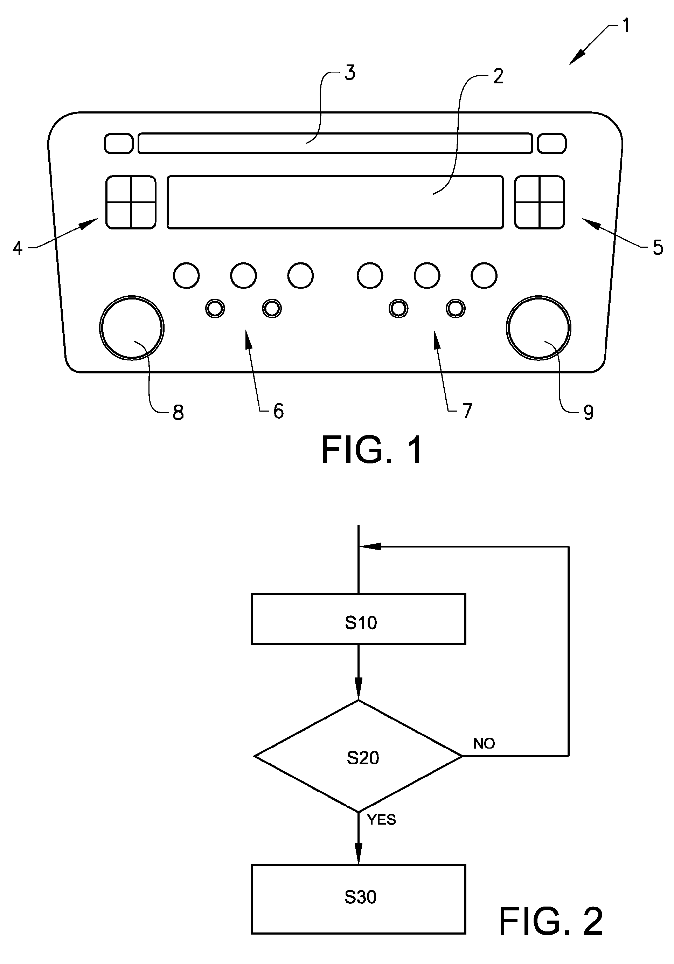

Fig. 1 shows an example of a car audio system 1 having a display 2, a CD slot 3, selection buttons 4, 5, 6 and 7, a rotational volume knob 8 and a rotational radio knob 9. The system is in this example switched on or off by pushing the volume button 8. The selection buttons 4, 5, 6 and 7 are used to select and alter different functions of the audio system, e.g. selecting program source, selecting radio station, altering the sound etc. These functions are not described further.

The rotational volume knob 8 is used to change the volume of the program listened to, either a CD, an external source or the radio. The volume knob may be connected in parallel with other input means that can control the volume in the same or in a different way, e.g. by push buttons in the steering wheel. There may also be other functions incorporated in the volume knob, such as power on/off, fader, tone control or similar.

The rotational radio knob 9 is used to change the frequency of the tuner, i.e. to select different radio stations. The rotational radio knob may be either an analogue knob, giving an analogue output to the tuner electronics, such as a voltage or a capacitance, or it may be an incremental pulse knob, giving pulses as an output. The pulses are converted by the electronics to represent a certain frequency increment.

By turning the rotational radio knob, the different radio stations available will be possible to find. The actual frequency selected will be shown in the display. Using the RDS system (Radio Data System), other information such as the name of the selected radio station can also be displayed in the display. At the same time, the selected radio station can be heard in the speakers. Between the radio stations, there may be heard a noise, or if the radio is provided with a mute function, the noise may be muted so that it is not heard at all. The mute function is preset from the factory, which means that the mute level, i.e. the receiving level where no signal is heard, can not be adjusted by the user. A consequence of this is that weak radio stations may not be possible to find. The mute function may be possible to disengage.

In the present invention, the radio tuning function is also provided with a feedback system in order to indicate to a user when a radio station is found and/or how strong the signal is, i.e. how good the reception is. By using this feedback function, the user receives instant information on the quality of the found radio station without having to look on a display. The user also receives information on where the optimal tuning frequency for the selected radio station is, i.e. the centre frequency for the radio station, without having to look on a display.

The inventive method will now be described. A user uses the radio knob to search for a radio station. In a first example, the user knows which radio station is searched for. He turns the knob and when a radio station is found, there will be a haptic feedback in the radio knob, i.e. the knob will give a signal back to the user. This signal is a force signal acting on the knob. When the radio station is found, the knob may be harder to turn or there may be a small force pulse when the position for the radio station is found. The user will at the same time hear the present radio station in the speakers. When the searched radio station is found, the user will know when to stop rotating the knob, i.e. when the centre frequency for the searched radio station is found, without having to look on a display.

Since the present radio stations can be heard at the same time, the user can scan past the radio stations not desired in a quick and easy way, as common on older radios, but will with the present invention also get a haptic, i.e. tactile, feedback signal when a radio station is found.

In one embodiment, the strength of the force feedback signal is dependent on the strength of the radio station found. If the signal is weak, i.e. the reception is bad, the feedback signal may also be weak, but will still indicate the centre frequency of the radio station found. This is of advantage when the reception is poor, but a specific radio station is looked for anyway.

The advantage of indicating the centre frequency of a radio station is that it may be difficult for a user to hear when the centre frequency of a radio station is found only by listening to the signal. With a good reception, the radio station will sound as if it was optimal tuned even when it is not exactly on the centre frequency. If the reception conditions change to the worse, the out of tune frequency shift will be noticeable and a new adjustment must be done. This situation is avoided by indicating the centre frequency for the radio station searched.

In one embodiment, the radio system will indicate that a radio station is found by giving a haptic feedback through the radio knob. In this embodiment, the feedback is given as soon as a sideband of the radio station is found, i.e. when the radio station can be heard but before the centre frequency of the radio station is reached. At the same time, the radio will lock the set frequency to the centre frequency of that radio station so that an optimal tuning is achieved. The user will in this case know that an optimal tuning is reached when the haptic feedback is given, without having to fine adjust the tuner.

The haptic feedback may be given as a short force pulse when the centre frequency is reached. The strength and the duration of the feedback signal may be fixed from the manufacturer or may be possible for the user to adapt to his/hers liking. The strength and the duration of the feedback signal may also depend on different parameters, such as the strength of the radio signal. If the signal is weak, i.e. the reception is bad, the feedback signal may also be weak, but will still indicate the centre frequency of the radio station found.

The gradient of the feedback signal may also be varied. In one example, the feedback signal uses a rather low gradient on the leading edge. This will give the user an indication of that a radio station is soon to be found but that the centre frequency is not yet reached. When the centre frequency is reached, and the user continues to rotate the knob, it may be decided that the user was not interested in that radio station. Thus, the trailing edge may be rather steep. This will also give more room for the gradient of the next radio station. By letting the rising edge of the feedback signal be dependent on the rotational direction of the knob, i.e. the direction of the frequency searched, the finding of a radio station is simplified for the user. If the user decides that the radio station just passed was the one looked for, and rotates the knob in the other direction, this will then be the rising edge which has a rather low gradient. This will help the user finding a radio station regardless in which direction he/she searches the frequency and thus the radio stations.

In one embodiment, the feedback is given such that the rotational knob is held in a position when a radio station is found, resembling a fixed position in the knob. The knob is locked in this position and held in that position for the frequency band corresponding to that radio station. Thus, the continued rotating of the knob will be harder, i.e. the resistance of the knob is higher, for the specific frequency band. This function can e.g. be obtained by using a brake that brakes the knob when a centre frequency or a frequency band is found for a specific radio station. If the user wants to continue the search for another radio station, he will continue rotating the knob and the resistance will be lowered when the radio station is passed by. The brake function can also be achieved by a motor that is powered such that the brake force is achieved.

The feedback signal may be generated by an electric motor that is powered such that the required feedback signal is achieved. The feedback signal may also be generated by an electromagnet acting on the knob.

The advantage of using a haptic feedback is that the eyesight of the driver is not needed to receive the feedback signal, i.e. the vision of the driver is not disturbed when the feedback is given. Also the hearing is not directly needed for the fine adjustment of the frequency of the radio station. Since the environment in a vehicle may sometimes be rather loud, there is an advantage of not being dependent on the hearing alone in order to tune the radio to the centre frequency of the desired radio station. The hearing is only needed in order to establish that the current radio station is the wanted one.

In a development of the invention, information regarding the radio stations is given at the same time as the haptic feedback. This information may comprise a list of the radio stations that are strong enough to give a haptic feedback. The list of strong stations may be shown in the form of an analogue scale, where the radio stations are shown as a small dot on the scale. The list of strong stations may also be shown as a list of frequency values and/or radio station names. In this way, it is easy for the operator to quickly see which radio stations that are to be used at a specific moment.

The information may also comprise a list of the radio stations that are stored in a memory. The list of stored stations may also be shown in the form of an analogue scale, where the stored radio stations are shown as a small dot on the scale, but with a different size and/or colour as the strong radio stations. The list of stored stations may also be shown as a list of frequency values and/or radio station names. In this way, it is easy for the operator to quickly see the radio stations stored in the memory.

When the frequency cursor passes a strong and/or stored radio station, a haptic feedback is given to the operator as described above. At the same time, a visual indication and/or an audio indication may be given at the same time. A visual indication may e.g. resemble a lamp that lights up when the centre frequency of the radio station is reached. An audio indication may e.g. be a short sound impulse given when the centre frequency of the radio station is reached.

The inventive method is described by the flow chart of fig. 2. In step S10, an input from the user is detected by a control unit in the audio system. The input is the rotation of the rotational tuning knob, which is rotated by the user when tuning the radio. The signal may be an analogue signal or may be pulses. The input signal is converted into a frequency change signal corresponding to a tuning of the radio. Thus, the input from the user will change the frequency of the radio.

In step S20, the system compares an actual value with a predetermined value in order to establish if a predefined condition is met. In this example, the actual value is the strength of the radio signal, which is measured by the control unit in the audio system. This measured signal is compared with a predefined value, representing a certain reception of the radio signal. This means that when the reception of a radio station is of a certain quality, e.g. good enough to allow a stereo separation of the signal, the predefined condition is met.

If the condition is met, i.e. the radio signal exceeds the predefined value, the method continues with step S30, in which the haptic feedback is given to the user. If the condition is not met, the method returns to step S20 and continues with a new comparison using a new measured value. This comparison with measured values will continue as long as the control unit detects an input value from the rotational knob.

In step S30, a haptic feedback is given to the user. The strength and the duration of the feedback signal may depend on different parameters, e.g. the strength of the radio signal and/or the speed of the tuning, i.e. the frequency change of the radio. Other parameters may also influence the feedback signal, such as the speed of the vehicle.

The invention is not to be regarded as being limited to the embodiments described above, a number of additional variants and modifications being possible within the scope of the subsequent patent claims.

## Claims

1. Method for giving feedback to a user of an audio system in a vehicle, wherein said system comprises a rotational knob, comprising the step of applying a haptic feedback to the rotational knob when a predefined condition is fulfilled.

2. Method according to claim 1, further comprising the steps of:
- sensing the rotation of the rotational knob performed by the user,
- changing the frequency of the radio depending on the rotation of the knob,
- measuring the strength of the radio signal, whereby the strength of the radio signal being above a predefined level corresponds to the predefined condition.

3. Method according to claim 1 or 2, wherein the strength of the haptic feedback signal is proportional to the strength of the radio signal.

4. Method according to any of claims 1 to 3, wherein the haptic feedback signal is given by a brake function acting on the rotational knob.

5. Method according to any of claims 1 to 3, wherein the haptic feedback signal is given by an active force generator acting on the rotational knob.

6. Method according to claim 5, wherein the active force generator is an electric motor.

7. Method according to any of claims 1 to 6, wherein the haptic feedback signal is given as a short force pulse.

8. Method according to any of claims 1 to 6, wherein the haptic feedback signal is given as a varying force signal.

9. Method according to any of claims 1 to 6, wherein the haptic feedback signal is provided with a gradient.

10. Method according to claim 9, wherein the slope of the gradient is dependent on the direction of the searched frequency.

11. Method according to claim 9 or 10, wherein the leading edge of the feedback signal has a lower gradient than the trailing edge of the feedback signal.

12. Radio comprising a rotational tuning knob, **characterized in that** the radio comprises means for giving a haptic feedback by applying a force to the knob.

13. Radio according to claim 12, **characterized in that** the means for giving a haptic feedback is an active force generator acting on the rotational knob.

14. Radio according to claim 13, **characterized in that** the active force generator is an electric motor.

15. Radio according to any of claims 12 to 14, **characterized in that** the haptic feedback is applied to the rotational knob when a predefined condition is fulfilled.
